# NEUE EUROPÄISCHE PATENTSCHRIFT

(11) **EP 2 614 105 B2**
(45) Veröffentlichungstag und Bekanntmachung des Hinweises auf die Entscheidung über den Einspruch: **18.05.2022**
(45) Hinweis auf die Patenterteilung: 06.08.2014
(21) Anmeldenummer: 11749194.4
(22) Anmeldetag: 31.08.2011
(51) Int. Cl.: C08G 69/46

(54) **VERFAHREN ZUR HERSTELLUNG VON VERARBEITUNGSSTABILEM POLYAMID**
METHOD FOR PRODUCING PROCESSING-STABLE POLYAMIDE
PROCÉDÉ DE PRODUCTION DE POLYAMIDE STABLE À LA MISE EN OEUVRE

(30) Priorität: 10.09.2010 EP 10176093
(43) Veröffentlichungstag der Anmeldung: 17.07.2013
(73) Patentinhaber: BASF SE, 67056 Ludwigshafen am Rhein (DE)
(72) Erfinder: GRÜTZNER, Rolf-Egbert, 67283 Obrigheim (DE); KEELAPANDAL RAMAMOORTHY, Shankara Narayanan, 68165 Mannheim (DE); EL-TOUFAILI, Faissal-Ali, 67063 Ludwigshafen (DE); GERSTLAUER, Achim, 67117 Limburgerhof (DE); STAMMER, Achim, 67251 Freinsheim (DE)
(74) Vertreter: Jacobi, Markus Alexander
(86) Internationale Anmeldenummer: PCT/EP2011/064932
(87) Internationale Veröffentlichungsnummer: WO 2012/031950

(56) Entgegenhaltungen:
- EP-A1- 0 437 155
- EP-A2- 0 038 094
- EP-A2- 0 038 094
- WO-A1-2007/085406
- WO-A1-2009/153340
- DE-A1- 2 033 653
- GB-A- 1 069 048
- US-A- 3 420 804
- US-B1- 6 268 468
- US-B1- 6 268 468
- Olmsted et al: J. Biol. Chem., vol. 85, 1929, pages 109-114,
- Hardman et al: Journal of Biological Chemistry, vol. 238, 1963, pages 2081-2087,

## Beschreibung

Die vorliegende Erfindung betrifft ein Verfahren zur Herstellung von Polyamiden mit erhöhter Verarbeitungsstabilität.

Aus der WO-A-02/4561 (US-B-6,268,468) ist ein Verfahren zur Behandlung eines im festen Zustand vorliegenden Polyamids bekannt, bei dem man das Polyamid mit einem inerten Stickstoff- oder Argonträgergas behandelt, das eine gasförmige Säure oder ein gasförmiges Anhydrid oder ein Amin enthält.

Aus der EP-A-1 333 049 ist die Stabilisierung von getrocknetem und entmonomerisiertem Polyamid 6 mit ausgewählten Lactonen oder Säureanhydriden in einem nachgelagerten zusätzlichen Verarbeitungsschritt in der Schmelze bekannt.

Diese Verfahren lassen noch zu wünschen übrig.

Der vorliegenden Erfindung lag daher die Aufgabe zugrunde, den zuvor genannten Nachteilen abzuhelfen.

Demgemäß wurde ein neues und verbessertes Verfahren zur Herstellung von verarbeitungsstabilen Polyamiden gemäß Anspruch 1 gefunden, welches dadurch gekennzeichnet ist, dass man das Polyamid während der Festphasennachkondensation mit einem Gas, das Inertgas, Wasser und Säure oder Anhydrid oder Lacton oder deren Gemische bzw. Ammoniak oder Amin oder deren Gemische enthält, bei einer Temperatur von 130 bis 200°C und einem Druck von 0,01 bis 10 bar behandelt.

Das erfindungsgemäße Verfahren kann wie folgt durchgeführt werden:

Bei der Festphasennachkondensation von Polyamid kann ein Gas, das Inertgas, Wasser und
a) Säure oder Anhydrid oder Lacton oder deren Gemische bzw.
b) Ammoniak oder Amin oder deren Gemische enthält,
oder nacheinander mit a) vor b) oder mit b) vor a) bei Temperaturen von 130 bis 200°C, bevorzugt 140 bis 180°C, besonders bevorzugt 150 bis 175°C und einem Druck von 0,01 bis 10 bar, bevorzugt 0,1 bis 5 bar, besonders bevorzugt bei Normaldruck (Atmosphärendruck) behandelt werden. Die Behandlungsdauer kann in weiten Grenzen variiert werden und beträgt in der Regel 1 bis 100 Stunden, bevorzugt 2 bis 60 Stunden, besonders bevorzugt 10 bis 50 Stunden, insbesondere 15 bis 40 Stunden.

Das eingesetzte Gas ist dadurch erhältlich, dass man eine Mischung der nicht wasserdampfflüchtigen Komponenten a) bzw. b) mit Wasser und dem Inertgas durch Ultraschall im Bereich von 25 kHz bis 3 MHz, bevorzugt 200 kHz bis 3 MHz, besonders bevorzugt 400 kHz bis 3 MHz vernebelt oder auf eine Temperatur im Bereich von 100 bis 300°C, bevorzugt 180 bis 250°C, besonders bevorzugt 200 bis 240°C, insbesondere 210 bis 230°C erhitzt und ggf. durch Ultraschall vernebelt.

Das Gas kann beispielsweise direkt oder mit Hilfe eines Inertgasträgerstromes an verschiedenen Stellen in den Festphasennachkondensator eingespeist werden. In einer bevorzugten Ausführungsform kann die Einleitung am oberen Ende des Nachkondensators (ca. 1/3 Weglänge unterhalb der Kondensatorspitze) vorgenommen werden. Eine Splittung des Gasstromes in zwei separate Zuleitungen oder die komplette Zudosierung des Gases am unteren Ende des Festphasennachkondensators sind ebenfalls möglich. In einer besonders bevorzugten Ausführungsform kann bei Zugabe des Additiv-/Inertgasstromes am oberen Ende des Nachkondensators und dem damit verbundenen Durchleiten des Gases über das Polyamid, bevorzugt durch das Polyamid beispielsweise im Gleichstrom erzielt werden. Die eingesetzten Additive können vor dem Einleiten in den Nachkondensator in Wasser gelöst werden, wobei Konzentrationen in der Regel zwischen 0,001 bis 10 Gew.-%, bevorzugt 0,01 bis 5 Gew.-%, besonders bevorzugt 0,02 bis 1 Gew.-% liegen. Diese Lösung kann anschließend mit dem Inertgas gemischt und bei Nutzung von wasserdampfflüchtigen Additiven auf eine Temperatur im Bereich von 100 bis 300°C, bevorzugt 180 bis 250°C, besonders bevorzugt 200 bis 240°C, insbesondere 210 bis 230°C erhitzt werden sowie ggf. anschließend in den Nachkondensator eingespeist werden. Im Falle von nicht wasserdampfflüchtigen Additiven kann ebenfalls eine wässrige Lösung hergestellt, diese bei Raumtemperatur vernebelt und anschließend analog wie im Fall von wasserdampfflüchtigen Additiven verfahren werden.

### Man kann das Wasser

a. der Mischung aus Inertgas und .Säure oder Anhydrid oder Lacton oder deren Gemischen bzw. Ammoniak oder Amin oder deren Gemischen oder
b. dem Inertgas oder
c. in Form von wässrigen Lösungen der Säure oder des Anhydrides oder des Lactons oder deren Gemischen bzw. wässrigem Ammoniak oder wässrigem Amin oder deren Gemischen zusetzen.

Bei der Festphasenkondensation als Teil der Herstellung von Polyamid (nachfolgend in D beschrieben)., liegt in der Regel Granulat mit einem Schüttgewicht von 500 bis 900 kg/m³, bevorzugt 600 bis 800 kg/m³, besonders bevorzugt 700 bis 800 kg/m³ bzw. einem Durchmesser von 1 bis 4 mm bevorzugt von 1,5 bis 3 mm, besonders bevorzugt von 2 bis 2,5 mm, vor.

Das für die Festphasenkondensation eingesetzte Polyamid lässt sich wie folgt herstellen:
A) Schmelzepolymerisation (siehe auch R. Vieweg; A. Müller; Kunststoff-Handbuch Band VI, Polyamide; C.Hanser Verlag 1966 S. 190ff)
   Flüssiges Caprolactam kann mit geringen Mengen Wasser als Reaktionsstarter in einem 1- oder 2-Stufenverfahren bei Temperaturen zwischen 240°C und 270°C über die Schmelze polykondensiert werden. Hierzu dient beispielsweise ein VK-Rohr an dessen Ende die Schmelze abgekühlt und granuliert werden kann.
B) Heisswasserextraktion (siehe auch R. Vieweg; A. Müller; Kunststoff-Handbuch Band VI, Polyamide; C.Hanser Verlag 1966 S. 193 + Referenzen)
   Hier kann die Entfernung des Restmonomers und der Oligomeren aus dem Polyamid durch Extraktion mit heißem Wasser z.B. Im Gegenstrom erfolgen. Das extrahierte, aber feuchte Polyamidgranulat kann danach
C) Trocknung (siehe ebenfalls R. Vieweg; A. Müller; Kunststoff-Handbuch Band VI, Polyamide; C.Hanser Verlag 1966 S. 194 + Referenzen)
   Dieser dritte Prozessschritt kann im Anschluss an die Heißwasserextraktion erfolgen und umfasst die Trocknung des extrahierten Granulates von ca. 10 Gew.-% Restfeuchte auf 1 bis 2 Gew.-%.
D) Festphasennachkondesation (analoge Referenzen)
   Das extrahierte und vorgetrocknete Granulat kann unter Ausschluss von Luftsauerstoff in einem geschlossenen System im festen Zustand getempert werden. Der Ausschluss des Luftsauerstoffes erfolgt üblicherweise durch Erzeugung einer Inertgasatmosphäre. Diese Behandlung ergibt als Endprodukt ein verarbeitungsfertiges Polyamid mit geeignetem Viskositätsniveau und stark abgesenkter Restfeuchte.

Die Trocknung (C) und Festphasennachkondensation (D) können auch in einem Schritt kombiniert werden, wobei z.B. in einem dafür genutzten Rohr der Trocknungsprozess in der Regel Im oberen Drittel, die Nachkondensation in der Regel in den unteren beiden Dritteln der verfügbaren Rohrlänge unter Ausschluss von Luftsauerstoff erfolgen kann.

Die Zugabe der beschriebenen Additive zur Erzielung der erhöhten Verarbeitungsstabilität erfolgt erfindungsgemäß während der Festphasennachkondensation D) bzw. im kombinierten Trocknungs-/Nachkondensationsrohr im Trägerstrom als Gas oder als vernebelte Wasserdampf/Additivmischung.

Polyamide sind langkettige synthetische Polymere mit Amidgruppen (-CO-NH-) in der Polymerhauptkette. Zu Beispielen für derartige Polyamide zählen Homopolyamide, erhalten durch die Polymerisation von Lactamen oder von Dicarbonsäuren und Diaminen sowie Copolymerisationsprodukte aus Mischungen von Diaminen, Dicarbonsäuren und Lactamen.

Als Polyamide eignen sich beispielsweise Polyamid 6, Polyamid 66, Polyamid 666, Polyamid 69, Polyamid 610, Polyamid 6T, Polyamid 6I/6T Polyamid 612, Polyamid 11, Polyamid 12, Polyamid 46, Polyamid MXD6 und Copolymere oder deren Mischungen, bevorzugt Polyamid 6, Polyamid 66 und Polyamid 666, besonders bevorzugt Polyamid 6.

Das heiße Gas enthält in der Regel ein Inertgas und 0,001 bis 20 Gew.-%, bevorzugt 0,1 bis 15 Gew.-%, besonders bevorzugt 1 bis 10 Gew.-% Wasser und 0,001 bis 10 Gew.-%, bevorzugt 0,01 bis 5 Gew.-%, besonders bevorzugt 0,02 bis 1 Gew.-% Säure oder Anhydrid oder Lacton oder deren Gemische bzw. Ammoniak oder Amin oder deren Gemische bezogen auf das eingesetzte Polyamid.

Als Inertgas eignen sich alle unter den Verarbeitungsbedingungen inerten Gase beispielsweise Helium, Neon, Argon, Krypton, Stickstoff, bevorzugt Stickstoff oder Argon, besonders bevorzugt Stickstoff.

Als Säuren eignen sich anorganische oder organische Säuren.

Als anorganische Säuren eignen sich Sauerstoffsäuren des Phosphors wie z.B. Phosphorsäure, Phosphonsäure, Phosphinsäure sowie Phosphonate, d.h. phosphonsäureenthaltende Organophosphorverbindungen wie 2-Aminoethylphosphonsäure (AEPN), 1-Hydroxyethyllden-1,1-diphosphonsäure (HEDP), Amino-tris(methylen phosphonsäure) (ATMP), Ethylendiamintetra(methylenphosphonsäure) (EDTMP), Tetramethylendiamin-tetra(methylenphosphonsäure) (TDTMP), Hexamethylendiamin-tetra(methylenphosphonsäure) (HDTMP), Diethylentriaminpenta(methylenphosphon-säure) (DTPMP), 2-Carboxylethyl-phosphonsäure (CEPA), bevorzugt Phosphorsäure, Phosphonsäure und Diethylentriamin-penta(methylenphosphonsäure) (DTPMP), besonders bevorzugt Phosphorsäure.

Als organische Säuren eignen sich kurz- und langkettige sowie verzweigte aliphatische oder aromatische Monocarbonsäuren der allgemeinen Formel R¹-COOH, in der R¹ für Wasserstoff, C₁ bis C₁₀-Alkyl, bevorzugt C₁ bis C₈-Alkyl, besonders bevorzugt C₁ bis C₄-Alkyl wie Methyl, Ethyl, n-Propyl, Iso-Propyl, n-Butyl, iso-Butyl, sec.-Butyl oder tert.-Butyl, insbesondere Ethyl oder n-Propyl und Phenyl steht, wie Ameisensäure, Essigsäure, Propionsäure, Benzoesäure, Pivalinsäure, bevorzugt Essigsäure und Propionsäure, besonders bevorzugt Propionsäure.

Als Anhydride eignen sich kettenförmige Anhydride der allgemeinen Formel R¹-C=0-0-0=C-R², in der R¹ und R² gleich oder verschieden sind und für C₁- bis C₁₀-Alkyl, bevorzugt C₁- bis C₈-Alkyl, besonders bevorzugt C₁- bis C₄-Alkyl wie Methyl, Ethyl, n-Propyl, iso-Propyl, n-Butyl, iso-Butyl, sec.-Butyl oder tert.-Butyl, insbesondere Methyl oder Ethyl sowie ringförmige Anhydride der allgemeinen Formel -R³-C=O-O-O=C-, in der -R³- für ein Alkylen mit 2 bis 6 C-Atomen, bevorzugt 2 bis 4 C-Atomen, besonders bevorzugt 2 bis 3 C-Atomen, Alkenylen mit 2 bis 6 C-Atomen, bevorzugt 2 bis 4 C-Atomen besonders bevorzugt 2 C-Atomen Alkinylen mit 2 bis 6 C-Atomen, bevorzugt 2 bis 4 C-Atomen, besonders bevorzugt 2 C-Atomen steht, wie Acetanhydrid, Succinsäureanhydrid, Glutarsäureanhydrid, Maleinsäureanhydrid, Phthalsäureanhydrid, bevorzugt Succinsäureanhydrid, Glutarsäureanhydrid, Maleinsäureanhydrid, besonders bevor zugt Succinsäureanhydrid und Glutarsäureanhydrid.

Als Lactone eignen sich γ-,δ- und ε-Lactone wie Butyrolacton, Valerolacton, Caprolacton, bevorzugt Butyrolacton, Caprolacton, besonders bevorzugt Caprolacton.
Als Amine eignen sich primäre Amine R¹-NH₂, sekundäre Amine R¹R²-NH, tertiäre Amine R¹R²R³-N und quartäre Amine R¹R²R³R⁴-N⁺(X⁻), in der R¹, R², R³, R⁴ unabhängig von einander für C₁- bis C₂₀-Alkyl, bevorzugt C₁- bis C₈-Alkyl, besonders bevorzugt C₁- bis C₄-Alkyl wie Methyl, Ethyl, n-Propyl und Isopropyl, C₃- bis C₂₀-Cycloalkyl, bevorzugt C₃- bis C₈-Cycloalkyl wie Cyclopropyl, Cyclobutyl, Cyclopentyl, Cyclohexyl, Cycloheptyl und Cyclooctyl, besonders bevorzugt Cyclopentyl, Cyclohexyl, Cycloheptyl und Cyclooctyl, Aryl wie Phenyl, 1-Naphthyl und 2-Naphthyl, C₇- bis C₂₀-Alkylaryl, bevorzugt C₇- bis C₁₂-Alkylphenyl wie Benzyl und Phenylethyl, C₈- bis C₂₀-Alkylarylalkyl, bevorzugt C₇- bis C₁₆-Alkylphenylalkyl wie 2-Methylbenzyl und 2-Methyl-phenylethyl, X für Halogen wie Fluor, Chlor, Brom oder Jod, bevorzugt Chlor oder Brom, besonders bevorzugt Chlor steht, besonders bevorzugt C₇- bis C₁₂-Alkylphenylalkyl wie 2-Methylbenzyl, C₁- bis C₂₀-Amine, bevorzugt C₁- bis C₈-Amine wie Methylamin, Dimethylamin, Ethylamin, n-Propylamin, 2-Propylamin, n-Butylamin, prim.-Butylamin, sec.-Butylamin, tert.-Butylamin, n-Pentylamin, 2-Pentylamin, 3-Pentylamin, n-Hexylamin, 2-Hexylamin, 3-Hexylamin, n-Heptylamin, 2-Heptylamin, 3-Heptylamin, 4-Heptylamin, n-Octylamin, 2-Octylamin, 3-Octylamin, Cyclopropylamin, Cyclobutylamin, Cyclopentylamin, Cyclohexylamin, Cycloheptylamin, Cyclooctylamin, 1,1,3,3-Tetramethylbutylamin, N-Ethylmethylamin Dimethylamin, Diethylamin, Di-n-propylamin, Di-iso-propylamin, Di-n-butylamin, Di-sec.-butylamin, Di-n-pentylamin, N-Methylpropylamin, N-Ethylpropylamin" besonders bevorzugt Methylamin, Dimethylamin und Cyclohexylamin, C₂- bis C₂₀-Diamine, bevorzugt C₂- bis C₈-Diamine wie 1,2-Diaminopropan, 1,3-Diaminopropan, 1,2-Diaminobutan, 1,3-Diaminobutan und 1,4-Diaminobutan, besonders bevorzugt C₂- bis C₆-Diamine.

Besonders bevorzugt ist Ammoniak.

Durch den Einsatz von Säure oder Anhydrid oder Lacton oder deren Gemischen kann eine Verringerung der Aminoendgruppen erzielt werden.

Durch den Einsatz von Ammoniak oder Amin oder deren Gemischen kann eine Verringerung der Carboxylendgruppen erzielt werden.

Ein derartig hergestelltes Polyamid hoher Viskosität erweist sich in der Regel als besonders verarbeitungsstabil während der Schmelzeextrusion durch Breitschlitz- oder ringförmige Düsen zu Flach- oder Blasfolien sowie durch ringförmige Düsen kleineren Durchmessers zu Monofilamenten.

In der Regel reduzieren sich bei der erfindungsgemäßen Verarbeitung von Polyamiden die über ein nicht-equimolares Verhältnis der vorhandenen Endgruppen (Amino- und Carboxylendgrup pen) verfügen, die Remonomerisierungsrate bei der Extrusion oder beim Aufschmelzen, die damit verbundene Reduzierung der Viskosität, insbesondere von hochviskosen Polyamidqualitäten sowie der Gehalt an regenerierten Monomeren in der Fertigware wie Folien, Monofilamenten, Fasern oder Teppichen.

Die Reduzierung der Aminoendgruppenzahl erweist sich darüber hinaus vorteilhaft für spinngefärbte Fasern, wobei die Fleckenanfälligkeit z.B. von daraus hergestellten Teppichen deutlich abnimmt

Das erfindungsgemäße Verfahren zur Behandlung der Polyamide während der Festphasennachkondensation hat in der Regel kaum oder keine negativen Auswirkungen auf die notwendige Verweilzeit der Granulate in der Nachkondensationsstufe. Es wird in der Regel im Gegenteil überraschenderweise sogar eine Beschleunigung beobachtet.

Aus dem erfindungsgemäß hergestellten Polyamid kann man verschiedenste Erzeugnisse herstellen. Zu nichteinschränkenden Beispielen für derartige Erzeugnisse zählen Folien, Monofilamente, Fasern, Garne, textile Flächengebilde und dergleichen.

Folien für flexible Verpackungen aus Polyamiden wie Polyamid 6 und Polyamid 666 können durch Schmelzeextrusion sowohl als Flachfolien (via Breitschlitzdüse) als auch als Blasfolien (via Ringdüsen) hergestellt werden, wobei in Abhängigkeit von der Anlagengröße und dem Durchsatz hohe Scherkräfte auf die Polyamidschmelze wirken. Diese ist aufgrund der vorrangig eingesetzten hohen Viskositäten (RV 3,3 - 5,0) wesentlich sensibler gegenüber Rückstellung des Gleichgewichtes zwischen Monomer und Polymer sowie thermischem Abbau. In beiden Fällen kommt es zur Bildung des Monomeren epsilon-Aminocaprolactam, welches entweder gasförmig in die Umgebung entweicht oder sich an gekühlten Anlagenteilen als Ablagerungen niederschlägt. Trotz hochentwickelter Absaugsysteme, insbesondere an Flachfolienanlagen, kommt es zu Düsen- bzw. Chill-roll Ablagerungen, die nach einer definierten Standzeit Verunreinigungen an der produzierten Folie verursachen und zu Reinigungsstopps führen. Diese Reingungsstopps unterbrechen die Folienfertigung und führen zu einer unbefriedigenden Ausbeute an Fertigprodukt.

Thermischer Abbau von hochviskosen Polyamiden führt weiterhin zu einer Reduzie- rung der durchschnittlichen Kettenlängen, was sich an Hand der relativen Viskosität messtechnisch nachweisen lässt. Dieser Prozess verstärkt sich bei aggressiveren Verarbeitungsbedingungen wie z.B. höhere Verarbeitungstemperaturen und limitiert somit den Durchsatz von Anlagen zur Herstellung von z.B. Folien.

Bei Einsatz von erfindungsgemäß hergestellten Polyamiden kann der themische Abbau zu verkürzten Polymerketten bzw. niedrigeren Viskositäten reduziert, die Rückbildung von Monomerem verringert sowie damit verbunden die Anzahl der Reinigungsstopps reduziert und somit die Ausbeute verbessert werden.

Verarbeitungsstabil bedeutet in Zusammenhang mit dieser Erfindung ein wesentlich robusteres Verhalten während der Schmelzeverarbeitung zu z.B. Folien, Monofilamenten, Fasern oder anderen Produkten, welches sich durch verringerten Viskositätsabbau sowie geringere Rückbildung und Freisetzung des Monomeren Caprolactam auch bei aggressiveren Verarbeitungsbedingungen auszeichnet.

### Experimenteller Teil / Beispiele

### Beispiel 1

### (Einfluss der Stickstofffeuchte auf die Festphasenpolykondensation ohne Additive)

Der Festphasenpolykondensationsreaktor bestand aus einem doppelwandigen zylindrischen Stahlgefäß mit einer Länge von 1000 mm und einem Innendurchmesser von 100 mm und einem Mantel mit Thermostat. Das Rohr saß über einem Kegel, der mit einem wassergekühlten Rohr verbunden war. Das Kühlrohr leitete das Granulat bis direkt oberhalb der Schnecke eines Austragsschneckenförderers. Über dem Reaktor war eine Schleuse mit zwei Kugelventilen angeordnet, durch die das Granulat eingeführt wurde.

Der Reaktor war mit verschiedenen Gaszuführungen ausgestattet. Die Hauptgaszufuhr wurde dem Rohr unten (im Kegel) zugeführt. Zur Gaszufuhr gehörten ein Durchgangsmessgerät für das Gasvolumen sowie drei Wärmetauscher, die das zugeführte Gas auf die gewünschte Temperatur erhitzten. Vor den Wärmetauschern wurden dem Gasstrom die Zusatzstoffe (Wasser und Verschlussmittel) über HPLC-Pumpen zugeführt, die die gewünschten Mengen einführten. Das zugeführte Gas wurde über ein perforiertes Rohr im Granulat verteilt.

Als Polymergranulat wurde bereits extrahiertes, PA 6 - Granulat mit der Viskositätszahl 152 ml/g eingesetzt.

Der Reaktor wurde bis zum notwendigen Füllstand gefüllt und die Menge markiert (6 kg). Die Gasversorgung (Stickstoff mit verschiedenen Wasserkonzentrationen) wurde gestartet. Nach Erreichen der Reaktionstemperatur wurden 350 g Granulat zugegeben sowie in einem Zweistundenrhythmus ausgetragen, um eine durchschnittliche Verweilzeit von 27 h im Rohr zu erreichen. Nach einer Laufzeit von 4 Tagen wurden die Proben entnommen und analysiert.

Tabelle 1 zeigt die Viskositätszahlen nach 27 h Festphasennachkondensation bei 165°C und 173°C bei Behandlung mit unterschiedlich feuchtem Stickstoff

**Tabelle 1**

| Temperatur | Feuchte | Stickstoff (unten) | Stickstoff (mittig) | Viskositätszahl |
|---|---|---|---|---|
| [°C] | [%] | [Nm³/h] | [Nm³/h] | [ml/g] |
| - | - | - | - | 152 |
| 165 | 0 | 0,19 | 0,38 | 232 |
| 165 | 1,3 | 0,19 | 0,38 | 230 |
| 165 | 6,2 | 0,19 | 0,38 | 220 |
| 173 | 0 | 0,19 | 0,38 | 255 |
| 173 | 6,2 | 0,19 | 0,38 | 246 |

### Beispiel 2

### Gasphasenmodifizierung während Stufe D) Festphasennachkondensation mit verschiedenen Säuren und -derivaten (diskontinuierliche Fahrweise: Batchprozess, Wasser/Additivmischungen)

6250 g Polyamidgranulat wurden über 9h bei 140°C vorgetrocknet und in den Reaktor eingefüllt, auf 173°C erhitzt und mit 2000 l/h Stickstoff gespült. Nach Erreichen der Temperatur wurde dem Stickstoffstrom (300 N l/h) ein 1 bis 10 Gew.-% Säure, Säureanhydrid, Lacton oder Amin enthaltender Dampfstrom (Durchflussrate 13,5 g/h) zugemischt. Zur Erzeugung dieses Dampfstroms wurde eine 1 bis 10 Gew.-% Säure-, Säureanhydrid-, Lacton- oder Aminlösung mit einer H PLC-Pumpe über einen Wärmetauscher zudosiert (84 g/h). Der Versuch lief 30 h, wobei eine 1 kg-Probe alle 10 h ausgetragen wurde. Vor jeder Probenentnahme wurde zur Gewährleistung der Probenhomogenität 500 g Material ausgetragen.

Die Ergebnisse für eine Reihe verschiedener Säuren, Säureanhydride, Lactone und Amine sind in Tabelle 2 zusammengefasst:

**Tabelle 2**

| **Additiv** | **Additiv (Gew %)**** | **VZ (ml/g)** | **d(VZ) (ml/g)** | **Monomer (%)** | **Δ % Monomer** |
|---|---|---|---|---|---|
| Ohne | 0 | 202 | - | 0,165 | - |
| Ameisensäure | 5 | 179 | -11,39% | 0,13 | -21,20% |
| Propionsäure | 5 | 203 | 0,5% | 0,15 | -9,10% |
| Phosphorsäure | 1 | 206 | 2,0% | 0,14 | -15,50% |
| Phosphorsäurediethylester | 5 | 203 | 0,5% | 0,15 | -9,10% |
| DTPMP * | 1 | 200 | -1,0% | 0,17 | 3,00% |
| DTPMP * | 2 | 184 | -8,9% | 0,16 | -3,03% |
| Caprolactone | 5 | 189 | -6.43% | 0,14 | -9,10% |
| * = Diethylentriamin-penta(methylenphosphonsäure) (DTPMP), | | | | | |
| ** = Gewichtsprozent der eingesetzten Additive in einer wässrigen Lösung | | | | | |

### Beispiel 3

### Gasphasenmodifizierung mit verschiedenen Säuren und -derivaten (kontinuierliche Fahrweise, Wasser/Additivmischungen)

Die eingesetzten Additive wurden in Wasser aufgelöst. Die genutzten Konzentrationen der wässrigen Lösungen finden sich in Spalte 2 der Tabellen 3 und 4. Vor Zugabe in einen kontinuierlichen Festphasennachkondensator (Höhe: 1 Meter; Durchmesser: 0,1 Meter; Durchsatz Granulat: 0,15 kg/h) wurden die wässrigen Lösungen mit 4 Vol.-% Trägergas Stickstoff versetzt. Diese Additiv/Wasser/N₂ - Mischung wurde dem heißen Stickstoffstrom (220°C) zugeführt und je nach Versuchsanordnung an verschiedenen Zugabeorten dosiert. Die gesamt Stickstoffmenge (0,366 N m³/h bei 20°C und 3,5 bar) wurde zu 15% (0,0549 N m³/h) nach ca. 1/3 der Verfahrenslänge vom oberen Ende des Rohrkopfes der Festphasennachkondensation sowie zu 85% (0,23113 N m³/h) am Rohrende dosiert. Der Durchsatz des mit Additiven beladenen Stickstoffes betrug 0,554 N m³/kg PA 6 bei 170°C und 1 bar Normaldruck, die eingetragene Wassermenge 15,566 g/h. Bei mit "-M" bezeichneten Versuchsadditiven (Spalte 1, Tabellen 3 und 4) wurde Additiv-/Wasserlösung an der oberen Zugabestelle (1/3 der Verfahrenslänge, wie beschrieben) dosiert.

Die Versuche wurden bei 167°C im Festphasennachkondensator kontinuierlich gefahren, wobei die Verweilzeit des Granulats mit 34 h konstant gehalten wurde. Unterschiede bei den resultierenden Viskositätszahlen (VZ) sowie Monomergehalten können der Tabelle 3 entnommen werden.
In den Versuchen wurden Additivkonzentrationen von 100 ppm Additiv/kg PA 6 bis 10.000 ppm/kg PA 6 betrachtet, wobei sich' der Bereich zwischen 100 ppm Additiv/kg PA 6 und 2000 ppm/kg PA 6 als besonders geeignet erwiesen hat.

Die Ergebnisse für eine Reihe verschiedener Säuren, Säureanhydride, Lactone und Amine sind in Tabelle 3 zusammengefasst

**Tabelle 3**

| **Additiv** | **Additiv (Gew.-%)** | **VZ (ml/g)** | **d(VZ) (ml/g)** | **Monomer (%)** | **Δ % Monomer** |
|---|---|---|---|---|---|
| Ohne (B36) | 0 | 215 | - | 0,35 | - |
| Ameisensäure | 2 | 216 | 0,47% | 0,14 | -60,00% |
| Ameisensäure | 5 | 176 | -18,14% | 0,13 | -62,86% |
| Ameisensäure - M* | 2 | 221 | 2,79% | 0,25 | -28,57% |
| Propionsäure | 5 | 226,7 | 5,44% | 0,16 | -54,29% |
| Propionsäure - M* | 5 | 236 | 9,77% | 0,18 | -48,57% |
| DTPMP | 0,5 | 224,3 | 4,33% | 0,18 | -48,57% |
| DTPMP | 1 | 206,7 | -3,86% | 0,2 | -42,86% |
| DTPMP - M* | 1 | 241 | 12,09% | 0,15 | -57,14% |
| Propylamin | 5 | 235,3 | 9,44% | 0,21 | -40,00% |
| * = Zugabeort in der "Mitte", bedeutet ca. 1/3 Verfahrenslänge unterhalb des Festphasennachkondensationsrohrkopfes | | | | | |

### Beispiel 4

### Gasphasenmodifizierung mit verschiedenen Säuren und -derivaten (Kontinuierliche Fahrweise, Ultraschallvernebelung wässriger Lösungen nichtflüchtiger Additive)

Für die Vernebelungsversuche kam ein Ultraschallvernebler Megasonic Sonosys der Fa. Sonosys Ultraschallsysteme GmbH, Neuenburg, Deutschland zum Einsatz. Die Additiv-/Wassermischungen wurden analog Beispiel 3 hergestellt. Die Verneblung erfolgte im Bereich von 400kHz bis 3 MHz bei Raumtemperatur. Die vernebelte Mischung wurde ebenfalls mit 4 Vol.-% Stickstoff angereichert und in den heißen (220°C) Stickstoffkreislauf an der in Beispiel 3 beschriebenen Position M eingespeist.

Der Versuchsaufbau des kontinuierlichen Festphasennachkondensators sowie alle genutzten Betriebsparameter entsprechen den in Beispiel 3 genannten.

Die Ergebnisse für eine Reihe verschiedener Säuren, Säureanhydride, Lactone und Amine sind in Tabelle 4 zusammengefasst

**Tabelle 4**

| **Additiv** | **Additiv (Gew.-%)** | **VZ (ml/g)** | **d(VZ) (ml/g)** | **Monomer (%)** | **Δ % Monomer** |
|---|---|---|---|---|---|
| Ohne | 0 | 215 | - | 0,35 | - |
| 0.1% H₃PO₄ *-M | 1** | 296,4 | 42% | 0,14 | -60% |
| 0.1% Propionsäure-M | 1 | 234,7 | 12% | 0,17 | -51% |
| 0.2% Propionsäure-M | 2 | 243,8 | 17% | 0,15 | -57% |
| 0.025% DTPMP-M | 0,25 | 254,5 | 22% | 0,15 | -57% |
| 0.00625% DTPMP-M | 0,125 | 237 | 13% | 0,23 | -34% |
| * = 0,1% H₃PO₄ = Konzentration Additiv / kg PA 6 | | | | | |
| ** = Konzentration der eingesetzten wässrigen Lösung | | | | | |

### Beispiel 5

### Verarbeitungsstabilität von in den Beispielen 3 und 4 modifiziertem Polyamid während der Extrusion zu Flachfolien

Auf einer Flachfolienanlage (Barmag 90mm Einschneckenextruder, 25D Verfahenslänge + Breitschlitzdüse, 40kg/h Durchsatz) wurden 50 µm PA 6 Einschichtfolien hergestellt (Schmelzetemperatur 280°C, Schmelzeverweilzeit 8 min). Die plastifizierte Schmelze wurde auf eine gekühlte Chill Roll (20°C) gefahren und die Folien aufgewickelt. An Proben der hergestellten Folien wurden mittels HPLC die Extraktzusammensetzung, insbesondere der Absolutgehalt an Caprolactam ermittelt.

Die Ergebnisse sind in Tabelle 5 und 6 zusammengefasst.

Tabelle 5 enthält dazu die Viskositätszahlen (VZ) sowie den gemessenen Restmonomeranteil (%) inklusive der jeweiligen Differenzen für die Gasphasenmodifizierung im kontinuierlichen Verfahren, Tabelle 6 die gleichen Informationen für die Vernebelungsmethode im kontinuierlichen Verfahren

**Tabelle 5**

| **Additiv** | **Additiv (Gew.-%)** | **VZ (ml/g)** | **d(VZ) (ml/g)** | **Monomer (%)** | **Δ % Monomer** |
|---|---|---|---|---|---|
| Ohne (B36) | 0 | 217 | - | 0,41 | - |
| Ameisensäure | 2 | 214 | -3 | 0,23 | -43,90% |
| Ameisensäure | 5 | 165 | -52 | 0,16 | -60,98% |
| Ameisensäure - M | 2 | 210 | -7 | 0,36 | -12,20% |
| Propionsäure | 5 | 223 | 6 | 0,32 | -21,95% |
| Propionsäure - M | 5 | 213 | | 0,33 | -19,51% |
| DTPMP | 0,5 | 226 | 9 | 0,33 | -19,51% |
| DTPMP | 1 | 195 | -22 | 0,36 | -12,20% |
| DTPMP - M | 1 | 233 | 16 | 0,25 | -39,02% |
| Propylamin | 5 | 221 | 4 | 0,30 | -26,83% |

**Tabelle 6**

| **Additiv** | **Additiv (Gew.-%)** | **VZ (ml/g)** | **d(VZ) (ml/g)** | **Monomer (%)** | **Δ % Monomer** |
|---|---|---|---|---|---|
| Ohne | 0 | 209 | - | 0,42 | - |
| 0.1% H₃PO₄ | 1 | 279 | 33% | 0,27 | -36% |
| 0.1% Propionsäure | 1 | 230 | 10% | 0,24 | -43% |
| 0.2% Propionsäure | 2 | 232 | 11% | 0,23 | -45% |
| 0.025% DTPMP | 0,25 | 231 | 11% | 0,25 | -40% |
| 0.00625% DTPMP | 0,0625 | 227 | 9% | 0,29 | -31% |

## Patentansprüche

1. Verfahren zur Herstellung von verarbeitungsstabilen Polyamiden, **dadurch gekennzeichnet, dass** man das Polyamid während der Festphasennachkondensation mit einem Gas, das Inertgas und Wasser und
a) Säure oder Anhydrid oder Lacton oder deren Gemische oder
b) Ammoniak oder Amin oder deren Gemische
enthält, bei einer Temperatur von 130 bis 200°C und einem Druck von 0,01 bis 10 bar behandelt wobei das eingesetzte Gas enthaltend
eine Mischung der nicht wasserdampfflüchtigen Komponenten a) oder b) mit Wasser und dem inertgas durch Ultraschall im Bereich von 25 kHz bis 3 MHz vernebelt wird oder eine Mischung der nicht wasserdampfflüchtigen Komponenten a) oder b) mit Wasser und dem Inertgas auf eine Temperatur im Bereich von 100 bis 300°C erhitzt wird.

2. Verfahren zur Herstellung von verarbeitungsstabilem Polyamid nach Anspruch 1, **dadurch gekennzeichnet, dass** man 0,001 bis 10 Gew.-% Säure oder Anhydrid oder Lacton oder deren Gemische bzw. Ammoniak oder Amin oder deren Gemische bezogen auf das Polyamid einsetzt.

3. Verfahren zur Herstellung von verarbeitungsstabilem Polyamid nach Anspruch 1 oder 2, **dadurch gekennzeichnet, dass** man das Wasser
a. der Mischung aus Inertgas und Säure oder Anhydrid oder Lacton oder deren Gemische bzw. Ammoniak oder Amin oder deren Gemische oder
b. dem Inertgas oder
c. in Form von wässriger Säure oder Anhydrid oder Lacton oder deren Gemischen bzw. wässrigem Ammoniak oder Amin oder deren Gemischen zusetzt.

4. Verfahren zur Herstellung von verarbeitungsstabilem Polyamid nach einem der Ansprüche 1 bis 3, **dadurch gekennzeichnet, dass** eine wasserdampfflüchtige Säure oder Anhydrid oder Lacton oder deren Gemische bzw. Ammoniak oder Amin oder deren Gemische direkt mit der Inertgas[Wassermischung erhitzt und in den Nachkondensator geleitet werden.

5. Verfahren zur Herstellung von verarbeitungsstabilem Polyamid nach einem der Ansprüche 1 bis 3, **dadurch gekennzeichnet, dass** eine nicht wasserdampffluchtige Säure oder Anhydrid oder Lacton oder deren Gemische bzw. Amin oder deren Gemische mit Hilfe eines Ultraschallvemebelers im Bereich von 25 kHz bis 3 MHz als feinste Tröpfchen in Wasser verteilt und diese Mischung in das Inertgas sowie anschliessend in den Festphasennachkondensator geleitet werden.

6. Verfahren zur Herstellung von verarbeitungsstabilem Polyamid nach einem der Ansprüche 1 bis 5, **dadurch gekennzeichnet, dass** das Gas 0,001 bis 20 Gew.-% Wasser enthält.

7. Verfahren zur Herstellung von verarbeitungsstabilem Polyamid nach einem der Ansprüche 1 bis 6, **dadurch gekennzeichnet, dass** man als Inertgas Stickstoff oder Argon einsetzt.

8. Verfahren zur Herstellung von verarbeitungsstabilem Polyamid nach einem der Ansprüche 1 bis 7, **dadurch gekennzeichnet, dass** man als Säure Ameisensäure, Essigsäure, Propionsäure oder deren Gemische einsetzt.

9. Verfahren zur Herstellung von verarbeitungsstabilem Polyamid nach einem der Ansprüche 1 bis 7, **dadurch gekennzeichnet, dass** man als Säure Phosphorsäure oder Gemische aus Phosphorsäure und Ameisensäure oder Propionsäure einsetzt.

10. Verfahren zur Herstellung von verarbeitungsstabilem Polyamid nach einem der Ansprüche 1 bis 7, **dadurch gekennzeichnet, dass** man als Säure Diethylentriaminpenta(methylenphosphonsäure) (DTPMP) oder Gemische aus DTPMP mit Phosphorsäure und/oder Ameisensäure sowie Propionsäure einsetzt.

11. Verfahren zur Herstellung von verarbeitungsstabilem Polyamid nach einem der Ansprüche 1 bis 7, **dadurch gekennzeichnet, dass** man als Anhydrid Succinsäureanhydrid, Glutarsäureanhydrid, Maleinsäureanhydrid oder Phthalsäureanhydrid einsetzt.

12. Verfahren zur Herstellung von verarbeitungsstabilem Polyamid nach einem der Ansprüche 1 bis 7, **dadurch gekennzeichnet, dass** man als Lacton Butyrolacton, Valerolacton und Caprolacton einsetzt.

13. Verwendung der Polyamide nach einem der Ansprüche 1 bis 12 für Pellets, und Granulate enthaltend oder bestehend aus Polyamid zur Herstellung von Folien, Monofilamenten oder Fasern.

## Claims

1. A process for producing polyamides that are stable during processing, which comprises treating the polyamide during the solid-phase postcondensation process with a gas which comprises inert gas and water, and
a) acid, or anhydride, or lactone, or a mixture of these, or
b) ammonia, or amine, or a mixture of these,
at a temperature of from 130 to 200°C and at a pressure of from 0.01 to 10 bar, where the gas used, comprising
a mixture of non-steam-volatile components a) or b) with water and the inert gas is atomized by ultrasound in the range from 25 kHz to 3 MHz, or a mixture of non-steam-volatile components a) or b) with water and the inert gas is heated to a temperature in the range from 100 to 300°C.

2. The process for producing polyamide that is stable during processing, according to claim 1, wherein, based on the polyamide, the amount used is from 0.001 to 10% by weight of acid, or anhydride, or lactone, or a mixture of these, or, respectively, ammonia, or amine, or a mixture of these.

3. The process for producing polyamide that is stable during processing, according to claim 1 or 2, wherein the water is added
a. to the mixture made of inert gas and acid, or anhydride, or lactone, or a mixture of these, or, respectively, ammonia, or amine, or a mixture of these, or
b. to the inert gas, or
c. in the form of aqueous acid, or anhydride, or lactone, or a mixture of these, or, respectively, aqueous ammonia, or amine, or a mixture of these.

4. The process for producing polyamide that is stable during processing, according to any of claims 1 to 3, wherein a steam-volatile acid, or anhydride, or lactone, or a mixture of these, or, respectively, ammonia, or amine, or a mixture of these, is directly heated with the inert gas/water mixture and passed into the postcondensation apparatus.

5. The process for producing polyamide that is stable during processing, according to any of claims 1 to 3, wherein a non-steam-volatile acid, or anhydride, or lactone, or a mixture of these, or, respectively, amine, or a mixture of these, is distributed in the form of very fine droplets in water with the aid of an ultrasound atomizer in the range from 25 kHz to 3 MHz, and this mixture is passed into the inert gas, and then also into the solid-phase-postcondensation apparatus.

6. The process for producing polyamide that is stable during processing, according to any of claims 1 to 5, wherein the gas comprises from 0.001 to 20% by weight of water.

7. The process for producing polyamide that is stable during processing, according to any of claims 1 to 6, wherein the inert gas used comprises nitrogen or argon.

8. The process for producing polyamide that is stable during processing, according to any of claims 1 to 7, wherein the acid used comprises formic acid, acetic acid, propionic acid, or a mixture thereof.

9. The process for producing polyamide that is stable during processing, according to any of claims 1 to 7, wherein the acid used comprises phosphoric acid, or a mixture made of phosphoric acid and formic acid, or propionic acid.

10. The process for producing polyamide that is stable during processing, according to any of claims 1 to 7, wherein the acid used comprises diethylenetriaminepenta(methylenephosphonic acid) (DTPMP), or a mixture made of DTPMP with phosphoric acid and/or formic acid, or else propionic acid.

11. The process for producing polyamide that is stable during processing, according to any of claims 1 to 7, wherein the anhydride used comprises succinic anhydride, glutaric anhydride, maleic anhydride, or phthalic anhydride.

12. The process for producing polyamide that is stable during processing, according to any of claims 1 to 7, wherein the lactone used comprises butyrolactone, valerolactone, or caprolactone.

13. The use of the polyamides according to any of claims 1 to 12 for pellets, and granules comprising or composed of polyamide for producing foils, monofils, or fibers.

## Revendications

1. Procédé pour la production de polyamides stables à la mise en œuvre, **caractérisé en ce que** pendant la post-condensation en phase solide on traite le polyamide par un gaz qui contient un gaz inerte et de l'eau et
a) un acide ou anhydride ou une lactone ou des mélanges de ceux-ci ou
b) de l'ammoniac ou une amine ou des mélanges de ceux-ci,
à une température de 130 à 200 °C et sous une pression de 0,01 à 10 bars, le gaz utilisé qui contient
un mélange des composants a) ou b) non entraînables à la vapeur d'eau, avec de l'eau et le gaz inerte, étant nébulisé par ultrasons dans la plage de 25 kHz à 3 MHz
ou un mélange des composants a) ou b) non entraînables à la vapeur d'eau, avec de l'eau et le gaz inerte, étant chauffé jusqu'à une température dans la plage de 100 à 300 °C.

2. Procédé pour la production de polyamide stable à la mise en œuvre selon la revendication 1, **caractérisé en ce qu'**on utilise 0,001 à 10 % en poids d'acide ou d'anhydride ou de lactone ou de mélanges de ceux-ci ou respectivement d'ammoniac ou d'amine ou de mélanges de ceux-ci, par rapport au polyamide.

3. Procédé pour la production de polyamide stable à la mise en œuvre selon la revendication 1 ou 2, **caractérisé en ce qu'**on ajoute l'eau
a. au mélange de gaz inerte et d'acide ou d'anhydride ou de lactone ou de mélanges de ceux-ci ou respectivement d'ammoniac ou d'amine ou de mélanges de ceux-ci ou
b. au gaz inerte ou
c. sous forme d'acide ou d'anhydride aqueux ou de lactone aqueuse ou de mélanges de ceux-ci ou d'ammoniac ou d'amine aqueuse ou de mélange de ceux-ci.

4. Procédé pour la production de polyamide stable à la mise en œuvre selon l'une quelconque des revendications 1 à 3, **caractérisé en ce qu'**on chauffe directement avec le mélange gaz inerte/eau un acide ou anhydride ou une lactone, entraînables à la vapeur d'eau, ou des mélanges de ceux-ci ou respectivement de l'ammoniac ou une amine ou des mélanges de ceux-ci, et on les envoie dans le post-condenseur.

5. Procédé pour la production de polyamide stable à la mise en œuvre selon l'une quelconque des revendications 1 à 3, **caractérisé en ce qu'**à l'aide d'un nébuliseur à ultrasons dans la plage de 25 kHz à 3 MHz on disperse en très fines gouttelettes dans de l'eau un acide ou anhydride ou une lactone, non entraînables à la vapeur d'eau, ou des mélanges de ceux-ci ou respectivement une amine ou des mélanges de ceux-ci, et on envoie ce mélange dans le gaz inerte ainsi qu'ensuite dans le post-condenseur de phase solide.

6. Procédé pour la production de polyamide stable à la mise en œuvre selon l'une quelconque des revendications 1 à 5, **caractérisé en ce que** le gaz contient 0,001 à 20 % en poids d'eau.

7. Procédé pour la production de polyamide stable à la mise en œuvre selon l'une quelconque des revendications 1 à 6, **caractérisé en ce qu'**on utilise comme gaz inerte l'azote ou l'argon.

8. Procédé pour la production de polyamide stable à la mise en œuvre selon l'une quelconque des revendications 1 à 7, **caractérisé en ce qu'**on utilise comme acide l'acide formique, l'acide acétique, l'acide propionique ou des mélanges de ceux-ci.

9. Procédé pour la production de polyamide stable à la mise en œuvre selon l'une quelconque des revendications 1 à 7, **caractérisé en ce qu'**on utilise comme acide l'acide phosphorique ou des mélanges d'acide phosphorique et d'acide formique ou d'acide propionique.

10. Procédé pour la production de polyamide stable à la mise en œuvre selon l'une quelconque des revendications 1 à 7, **caractérisé en ce qu'**on utilise comme acide l'acide diéthylènetriaminepenta(méthylène-phosphonique (DTPMP) ou des mélanges de DTPMP et d'acide phosphorique et/ou d'acide formique ainsi que d'acide propionique.

11. Procédé pour la production de polyamide stable à la mise en œuvre selon l'une quelconque des revendications 1 à 7, **caractérisé en ce qu'**on utilise comme anhydride l'anhydride succinique, l'anhydride glutarique, l'anhydride maléique ou l'anhydride phtalique.

12. Procédé pour la production de polyamide stable à la mise en œuvre selon l'une quelconque des revendications 1 à 7, **caractérisé en ce qu'**on utilise comme lactone la butyrolactone, la valérolactone et la caprolactone.

13. Utilisation des polyamides selon l'une quelconque des revendications 1 à 12, pour des granules et des granulés contenant du ou consistant en polyamide, pour la fabrication de films, de monofilaments ou de fibres.
